# EUROPÄISCHE PATENTSCHRIFT

(11) **EP 2 782 811 B1**
(45) Veröffentlichungstag und Bekanntmachung des Hinweises auf die Patenterteilung: **12.10.2016**
(21) Anmeldenummer: 12786842.0
(22) Anmeldetag: 06.11.2012
(51) Int. Cl.: B62D 25/06, B62D 29/04

(54) **LEICHTBAUELEMENT FÜR EINE KAROSSERIE**
LIGHT COMPONENT FOR A VEHICLE BODY
ÉLÉMENT DE CAROSSERIE DE CONSTRUCTION LÉGÈRE

(30) Priorität: 22.11.2011 DE 102011119246
(43) Veröffentlichungstag der Anmeldung: 01.10.2014
(73) Patentinhaber: Daimler AG, 70327 Stuttgart (DE)
(72) Erfinder: GNEITING, Philipp, 70199 Stuttgart (DE); IDRISI, Kamal, 71067 Sindelfingen (DE)
(74) Vertreter: JENSEN & SON
(86) Internationale Anmeldenummer: PCT/EP2012/004612
(87) Internationale Veröffentlichungsnummer: WO 2013/075789

(56) Entgegenhaltungen:
- DE-A1- 10 357 908
- DE-A1- 10 359 514
- DE-A1-102005 006 201
- DE-A1-102009 040 934
- DE-A1-102010 013 784
- JP-A- 2001 180 533
- "The Mercedes-Benz bionic car Streamlined and light, like a fish in water - economical and environmentally friendly thanks to the latest diesel technology", Press Kit: The Mercedes-Benz bionic car as a concept vehicle - DaimlerChrysler Innovation Symposium in Washington, D. C. 2005, 7. Juni 2005 (2005-06-07), XP055056424, Gefunden im Internet: URL:http://media.daimler.com/Projects/c2c/ channel/documents/1133372_89404605_MB_bion iccar_en.pdf?dlf=1133372_89404605_MB_bioni ccar_en.pdf [gefunden am 2013-03-13]

## Beschreibung

Die Erfindung betrifft ein Leichtbauelement für eine Karosserie eines Kraftfahrzeugs nach der im Oberbegriff von Anspruch 1 näher definierten Art. Außerdem betrifft die Erfindung eine bevorzugte Verwendung eines solchen Leichtbauelements.

Bauteile für die Karosserie eines Kraftfahrzeugs sind aus dem allgemeinen Stand der Technik bekannt. Sie können beispielsweise aus einem Tragrahmen ausgebildet sein, welcher typischerweise einen im Wesentlichen einen Viereck ausbildenden Tragrahmen aus einzelnen Rahmenteilen aufweist. Der Tragrahmen ist dann mit einer Beplankung versehen, beispielsweise einem Blech, einer Leichtbaumembran, einem transparenten Kunststoff, einem Glas oder dergleichen. Beispielhaft soll hierzu auf die deutsche Offenlegungsschrift DE 103 57 908 A1 oder auch die gattungsmässe Offenlegungsschrift DE 10 2010 013 784 A1 verwiesen werden. Bei Leichtbauteilen sind dabei insbesondere Elemente und Materialien im Einsatz, welche leichter als der üblicherweise verwendete Stahl sind. Hierzu sind leichte metallische Legierungen oder faserverstärkte Kunststoffe denkbar. Beispielhaft soll hierzu auf die DE 199 36 882 A1 verwiesen werden.

Zum weiteren Stand der Technik kann auf die DE 1 804 687 A verwiesen werden. Diese zeigt eine Dachausbildung für Fahrzeuge, bei welcher ein Rahmenelement durch im Wesentlichen X-förmige Streben versteift und anschließend mit einer Beplankung überzogen wird. Ein ähnlicher Aufbau ist außerdem aus der DE 10 2005 006 201 A bekannt, wobei diese Dachanordnung zwischen zwei über X verstrebten Bereichen eine Ausnehmung beispielsweise für ein Schiebedach aufweist. Zum weiteren allgemeinen Stand der Technik soll ferner auf die DE 101 63 822 B4 verwiesen werden, welche ein Dachmodul für ein Kraftfahrzeug zeigt, bei welchem die Streben als im Querschnitt U-förmig konfigurierte Schalungen mit inneren Aussteifungen konfiguriert sind. Letztlich ist aus der DE 102 00 750 B4 außerdem ein Kunststoffmaterial in Sandwichstruktur bekannt, welches über eine Schicht als Wabenstruktur verfügt und als transparentes oder transluzentes Fahrzeugdach, insbesondere als Beplankung für ein solches, eingesetzt werden kann.

Zum weiteren Stand der Technik wird auf die DE 103 59 514 A1 sowie die JP 2001-180533 A verwiesen, welche ebenfalls Unterkonstruktionen mit sich überkreuzenden Streben für Fahrzeugdächer zeigen. Außerdem ist aus der DE 10 2009 040 934 A1 ein Kunststoffformteil für ein Kraftfahrzeug bekannt. Des Weiteren wird auf die Veröffentlichung "The Mercedes-Benz bionic car: Streamlined and light, like a fish in water - economical and environmentally friendly thanks to the latest diesel technology", Press Kit: The Mercedes-Benz bionic car as a concept vehicle - DaimlerChrysler Innovation Symposium in Washington, D. C. 2005, 7. Juni 2005 hinsichtlich bionischer Formgebungen in Fahrzeugen verwiesen.

Die Aufgabe der hier vorliegenden Erfindung besteht nun darin, ein Leichtbauelement für die Karosserie eines Kraftfahrzeugs zu schaffen, welches außerordentlich leicht und stabil aufgebaut werden kann.

Ein erfindungsgemäßes Leichtbauteil, welches diese Aufgabe löst, ist durch die Merkmale im kennzeichnenden Teil des Anspruchs 1 beschrieben. Weitere vorteilhafte Ausgestaltungen des Leichtbauelements ergeben sich aus den hiervon abhängigen Unteransprüchen. Außerdem ist im Anspruch 6 eine bevorzugte Verwendung für ein derartiges Leichtbauelement beschrieben.

Das erfindungsgemäße Leichtbauelement ist so ausgebildet, dass es vergleichbar wie die Leichtbauelemente gemäß dem Stand der Technik einen Tragrahmen umfasst, welcher vier Rahmenteile aufweist, die im Wesentlichen ein Viereck aufspannen. Dieser Tragrahmen ist dann mit einer Beplankung, beispielsweise einem transparenten Material, versehen. Gemäß der Erfindung ist der Tragrahmen aus einem faserverstärkten Kunststoff ausgebildet und weist wenigstens zwei sich überkreuzende Streben auf, welche nach bionischen Gesichtspunkten ausgebildet und im Kreuzungspunkt verbunden sind, und welche zwei der zueinander senkrecht stehenden Rahmenteile miteinander verbinden. Die Auslegung der einzelnen Streben sowie ihre Anbindung an den Rahmenteilen erfolgt nach bionischen Gesichtspunkten. Dies bedeutet, dass die Übergänge und die Formgebung typischerweise stetig verläuft und durch einen Zug von Winkelhalbierenden, eine Tangensfunktion oder dergleichen, ausgestaltet ist. Derartige bionische Konstruktionsgesichtspunkte sind aus der mechanischen Konstruktionslehre an sich bekannt. Die so ausgebildeten Streben überkreuzen sich in dem Tragrahmen des erfindungsgemäßen Leichtbauelements und sind im Kreuzungspunkt miteinander verbunden. Die Streben verbinden dabei zwei der senkrecht zueinander stehenden Rahmenteile miteinander. Hierdurch wird eine hohe Stabilität gegen Biegung und Torsion erzielt. Der faserverstärkte Kunststoff, beispielsweise ein mit Kohlenfasern verstärkter Kunststoff, kann dabei so ausgebildet sein, dass die Kraftverläufe oder zumindest nennenswerte Kraftkomponenten in den Streben und Rahmenteilen sowie insbesondere in den Übergängen und Verbindungspunkten in Faserrichtung verlaufen. Hierdurch lässt sich mit optimiertem Materialeinsatz eine sehr hohe Festigkeit erzielen, sodass das erfindungsgemäße Leichtbauelement leichter und dennoch stabiler als bisherige Elemente für die Karosserie von Kraftfahrzeugen ist.

Dabei ist es vorgesehen, dass Rahmenteile und Streben spiegelsymmetrisch zu einer Symmetrieachse angeordnet sind. Diese Symmetrieachse kann dabei insbesondere in Fahrtrichtung des Fahrzeugs verlaufen. Dieser spiegelsymmetrische Aufbau garantiert eine hohe Torsionssteifigkeit und erlaubt eine Steigerung der Torsionsschwingungsmoden.

Ferner ist der eine Teil des Tragrahmens in Richtung der Symmetrieachse auf der einen Seite weitgehend frei von Streben ausgebildet ist, während der in Richtung der Symmetrieachse gegenüberliegende Teil den größten Teil der Streben und alle Kreuzungspunkte der Streben untereinander aufweist. Eine solche Ausgestaltung mit auf eine Seite des Tragrahmens verschobenen Streben erlaubt weiterhin eine sehr hohe Steifigkeit gegen Torsion und Querbiegung mit einer minimalen Einbuße bei der Steifigkeit gegenüber Lateralbiegungen. Allerdings ermöglicht der Aufbau einen sehr stabilen Tragrahmen des Leichtbauelements, welcher einen Teil des umschlossenen Raumes weitgehend freilässt. Dies ist insbesondere beim Einsatz einer transparenten Beplankung von entscheidendem Vorteil, da hierdurch beispielsweise große Fensterflächen in einem Fahrzeug durch das erfindungsgemäße Leichtbauelement realisiert werden können.

Außerdem ist der Tragrahmen in Richtung der Symmetrieachse länger als quer zur Symmetrieachse ausgebildet, wobei gebogene Streben zwischen den Streben vorhanden sind, welche von dem jeweils längeren Rahmenteil und wenigstens einem der kürzeren Rahmenteile im Bogen zurück zu demselben Rahmenteil verlaufen. Sie können teilweise mit den Streben in ihrem Verlauf zusammenfallen und kreuzen andere Streben.

Die Verwendung des erfindungsgemäßen Leichtbauelements liegt daher insbesondere in einem Einsatz mit einer transparenten oder einer hinsichtlich Transparenz und/oder Farbe veränderbaren Beplankung zum Einsatz als Fahrzeugdach, da hier, insbesondere in der zuletzt genannten Ausgestaltung, bei hoher Steifigkeit und geringem Gewicht vergleichsweise große freie Flächen erzielt werden, welche lediglich die Beplankung aufweisen und so beispielsweise eine gute Sicht nach oben in einem mit einem solchen Fahrzeugdach versehenen Fahrzeug ermöglichen.

Weitere vorteilhafte Ausgestaltungen des erfindungsgemäßen Leichtbauelements sind in den restlichen abhängigen Patentansprüchen angegeben und ergeben sich aus dem nachfolgend anhand der Figuren näher beschriebenen Ausführungsbeispiel.

Dabei zeigen:
- Fig. 1: einen Ausschnitt aus einer Fahrzeugkarosserie mit einem erfindungsgemäßen Leichtbauelement als Fahrzeugdach; und
- Fig. 2: eine Draufsicht auf den Tragrahmen des erfindungsgemäßen Leichtbauelements.

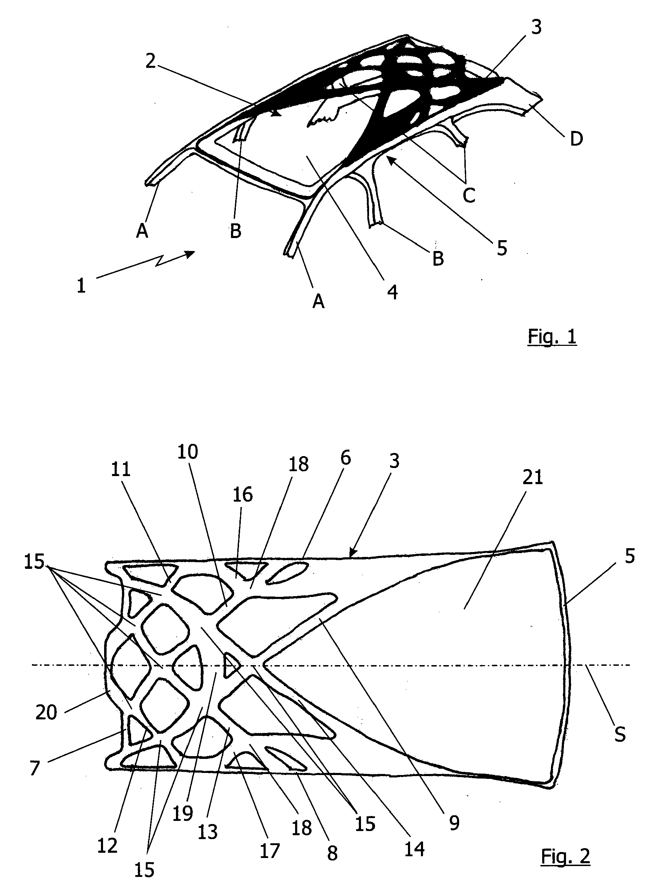

In der Darstellung der Figur 1 ist der Teil eines prinzipmäßig angedeuteten Kraftfahrzeugs 1 zu erkennen. Es handelt sich dabei um einen Teil des sogenannten Rohbaus des Kraftfahrzeugs 1, insbesondere um dessen Dachbereich. Mit A, B, C und D sind dabei die mit dem Dachbereich verbundenen Ansätze der sogenannten A-Säulen, B-Säulen, C-Säulen und D-Säulen gezeigt. Wie üblich, ist der Dachbereich in dem hier dargestellten Ausschnitt des Rohbaus offen ausgebildet. Er kann bei Ausführungen gemäß dem Stand der Technik beispielsweise durch Querträger und ein darauf aufgebrachtes Aluminiumblech als Beplankung verschlossen werden. In dem hier dargestellten Fall dient als Dach ein Leichtbauelement 2, welches aus einem in Figur 1 schwarz dargestellten Tragrahmen 3 sowie einer transparenten Beplankung 4 besteht. Die transparente Beplankung kann beispielsweise aus einem Kunststoffmaterial, einem Glas oder auch einem sogenannten funktionalen Material wie beispielsweise einem in seiner Transparenz und/oder Farbe durch das Anlegen eines elektrischen Potenzials verstellbaren Materials ausgebildet sein. Die Beplankung spielt für die hier vorliegende Erfindung eine untergeordnete Rolle, sodass hierauf nicht näher eingegangen wird.

Für das hier beschriebene Leichtbauelement 1 ist der Tragrahmen 3 entscheidend. Dieser Tragrahmen 3 ist daher in der Darstellung der Figur 2 nochmals in einer Draufsicht dargestellt. Er ist spiegelsymmetrisch zur Symmetrieachse S ausgebildet und weist vier Rahmenteile 5, 6, 7 und 8 auf. Der Tragrahmen 3 ist dabei vorzugsweise so ausgebildet, dass er in die eine Richtung, hier in Richtung der Symmetrieachse S mit einer größeren Abmessung ausgebildet ist, als in der anderen quer dazu liegenden Richtung. Dementsprechend sind die Teilrahmen 6, 8 länger ausgeführt, als die kürzeren Teilrahmen 5, 7. Insgesamt spannen die vier Teilrahmen jedoch ein Viereck beziehungsweise je nach Krümmung des Dachs in ihrer Projektion ein Viereck auf. Zur Versteifung der vier Rahmenteile 5, 6, 7, 8 sind sechs zusätzliche Streben 9, 10, 11, 12, 13, 14 vorgesehen. Jeweils drei der Streben 9, 10, 11 erstrecken sich ausgehend von dem längeren Rahmenteil 6 hin zu dem kürzen Rahmenteil 7 und drei weitere Streben 12, 13, 14 erstrecken sich von dem längeren Rahmenteil 8 ebenfalls zu dem kürzeren Rahmenteil 7. Die Streben 9 bis 14 kreuzen sich untereinander und sind in ihren Kreuzungspunkten 15 miteinander verbunden. Die Streben 9 bis 14 sind ebenso wie die Rahmenteile 5 bis 8 nach bionischen Kriterien konstruiert, sodass die Übergänge im Material nicht abrupt erfolgen, sondern in stetigen aus der Biologie bekannten Formen, beispielsweise in Form von Tangensfunktionen, von aus Winkelhalbierenden konstruierten Linienzügen oder dergleichen. Im Bereich der Kreuzungspunkte 15, in denen sich die Streben 9, 10, 11 ausgehend vom Rahmenteil 6 und die Streben 12, 13, 14 welche vom Rahmenteil 8 ausgehen, kreuzen, sind diese miteinander verbunden. In diesem Bereich können die einzelnen Streben 9 bis 14 zusätzliche Materialauflagen aufweisen. Als Material wird dabei vorzugsweise faserverstärkter Kunststoff, insbesondere kohlefaserverstärkter Kunststoff, eingesetzt. Damit lassen sich sehr kleine maximale Wandstärken von typischerweise weniger als 5 mm realisieren. Im Bereich der Streben 9 bis 14 und der Kreuzungspunkte 15 kann die Faserrichtung dabei so geführt werden, dass diese dem zu erwartenden Kraftfluss entspricht und somit mit minimalem Materialeinsatz die maximale Festigkeit des Tragrahmens 3 erzielt werden kann.

Zusätzlich dazu befinden sich an den beiden längeren Rahmenteilen 6, 8 jeweils gebogene Streben 16, 17, welche vom jeweiligen Rahmenteil 6, 8 ausgehend in Richtung der Symmetrieachse reichen und nachdem sie eine der Streben 9, 10, 13 in Kreuzungspunkten 18 gekreuzt haben, wieder zurück zum jeweiligen Rahmenteil 6, 8 verlaufen. Eine ähnlich aufgebaute gebogene Strebe ist mit dem Bezugszeichen 19 versehen auf der Seite des kürzeren Rahmenteils 7 angeordnet. Die gebogene Strebe 19 fällt dabei teilweise mit den Streben 9, 14 in ihrem Verlauf zusammen und kreuzt die anderen Streben 10, 11, 12 und 13 ebenfalls. Auch diese Kreuzungspunkte 18 können vorzugsweise durch zusätzlichen faserverstärkten Kunststoff verstärkt werden. Eine weitere gebogene Strebe mit dem Bezugszeichen 20 ragt vom hier durchbrochenen Rahmenteil 7 in die andere Richtung als die beschriebene gebogene Strebe 19.

Insgesamt ist der Aufbau dabei spiegelsymmetrisch zur Symmetrieachse S ausgebildet. Er ermöglicht in der Darstellung der Figur 2 im linken dem kürzen Rahmenteil 5 zugewandten Ende eine vergleichsweise große freie Fläche 21. Wie aus der Darstellung der Figur 1 zu erkennen ist, ist diese vergleichsweise große freie Fläche 21 oberhalb des Bereichs zwischen der A-Säule und der B-Säule und teilweise oberhalb des Bereichs zwischen der B-Säule und der C-Säule angeordnet. Insbesondere mit der bereits angesprochenen transparenten oder zumindest teilweise transparenten Beplankung 4 ermöglicht das Leichtbauelement 2 damit eine sehr große Fensteröffnung in das Dach des Fahrzeugs 1. Der Aufbau des Tragrahmens 3 erlaubt dabei eine sehr viel höhere Torsionssteifigkeit und insbesondere eine Steigerung der globalen Schwingungsmoden, insbesondere des Torsionsmodus. Er erreicht außerdem eine sehr viel höhere Steifigkeit hinsichtlich Querbiegung. Die Steifigkeit hinsichtlich Lateralbiegung geht minimall zurück, dies ist aufgrund der hohen Torsionssteifigkeit und Steifigkeit gegen Querbiegung jedoch zu tolerieren und ermöglicht so, deutlich leichter als bei einem herkömmlichen Dachaufbau, ein sehr stabiles und hinsichtlich des Komforts und der Möglichkeit des Einbringens einer große Fensteröffnung sehr vorteilhaftes Dach des Fahrzeugs 1. Darüber hinaus ist der durch bionische Konstruktionsüberlegungen optimierte Aufbau des Leichtbauelements 2 sehr formschön und kann als Designelement, insbesondere bei Verwendung mit transparenter Beplankung, eingesetzt werden.

## Patentansprüche

1. Leichtbauelement (2) für eine Karosserie eines Kraftfahrzeugs (1)
mit einem vier Rahmenteile (5, 6, 7, 8) aufweisenden Tragrahmen (3),
welcher im Wesentlichen ein Viereck aufspannt, und
wenigstens zwei sich überkreuzende Streben (9, 10, 11, 12, 13, 14, 16, 17, 19, 20) aufweist, welche nach bionischen Gesichtspunkten ausgebildet sind und
in dem oder den Kreuzungspunkten (15, 18) verbunden sind, und
welche jeweils zwei der zueinander senkrecht stehenden Rahmenteile (5, 6, 7, 8) miteinander verbinden,
und mit einer auf dem Tragrahmen (3) angebrachten Beplankung (4), wobei
der Tragrahmen (3) aus einem faserverstärkten Kunststoff ausgebildet ist, **dadurch gekennzeichnet, dass**
die Rahmenteile (5, 6, 7, 8) und die Streben (9, 10, 11, 12, 13, 14, 16, 17, 19, 20) spiegelsymmetrisch zu einer Symmetrieachse (S) angeordnet sind, und
- wobei der eine Teil (21) des Tragrahmens (3) in Richtung der Symmetrieachse (S) auf der einen Seite überwiegend frei von Streben (9, 10, 11, 12, 13, 14, 16, 17, 19, 20) ausgebildet ist, während der in Richtung der Symmetrieachse (S) gegenüberliegende Teil den größten Teil der Streben (9, 10, 11, 12, 13, 14, 16, 17, 19, 20) und alle Kreuzungspunkte (15, 18) der Streben (9, 10, 11, 12, 13, 14, 16, 17, 19, 20) untereinander aufweist,
- wobei der Tragrahmen (3) in Richtung der Symmetrieachse (S) länger als quer zur Symmetrieachse (S) ausgebildet ist,
- wobei gebogene Streben (16, 17, 19) zwischen den Streben (9, 10, 11, 12, 13, 14) vorhanden sind, welche von dem jeweils längeren Rahmenteil (6, 8) und wenigstens einem der kürzeren Rahmenteile (7) im Bogen zurück zu demselben Rahmenteil (6, 7, 8) verlaufen.

2. Leichtbauelement (2) nach Anspruch 1,
**dadurch gekennzeichnet, dass**
die Symmetrieachse (S) in Fahrtrichtung des Fahrzeugs (1) verläuft.

3. Leichtbauelement (2) nach einem der Ansprüche 1 oder 2,
**dadurch gekennzeichnet, dass**
jeweils drei Streben (9, 10, 11, 12, 13, 14) von jedem der längeren Rahmenteile (6, 8) zu einem gemeinsamen der kürzeren Rahmenteile (7) verlaufen, welche sich jeweils mit wenigstens zwei anderen Streben (9, 10, 11, 12, 13, 14) überkreuzen.

4. Leichtbauelement (2) nach einem der Ansprüche 1 bis 3,
**dadurch gekennzeichnet, dass**
die Kreuzungspunkte (15, 18) mit zusätzlichem faserverstärktem Kunststoff verstärkt ausgebildet sind.

5. Leichtbauelement (2) nach einem der Ansprüche 1 bis 4,
**dadurch gekennzeichnet, dass**
die Beplankung (4) transparent oder in ihrer Transparenz und/oder Farbe veränderbar ausgebildet ist.

6. Verwendung des Leichtbauelements (2) nach einem der Ansprüche 1 bis 5 als Fahrzeugdach.

## Claims

1. Light component (2) for a bodywork of a motor vehicle (1),
with a support frame (3) having four frame parts (5, 6, 7, 8),
which substantially spans over a square, and
has at least two intersecting struts (9, 10, 11, 12, 13, 14, 16, 17, 19, 20) which are designed according to bionic aspects and are connected at the intersection point(s) (15, 18), and
which respectively interconnect two of the frame parts (5, 6, 7, 8) arranged perpendicularly to each other,
and with a panelling (4) arranged on the support frame (3),
wherein the support frame (3) is formed from a fibre-reinforced plastic,
**characterised in that**
the frame parts (5, 6, 7, 8) and the struts (9, 10, 11, 12, 13, 14, 16, 17, 19, 20) are arranged mirror symmetrically to an axis of symmetry (S), and
- wherein a part (21) of the support frame (3) is designed in the direction of the axis of symmetry (S) on one side predominantly free from struts (9, 10, 11, 12, 13, 14, 16, 17, 19, 20), while the part lying opposite in the direction of the axis of symmetry (S) has the majority of the struts (9, 10, 11, 12, 13, 14, 16, 17, 19, 20) and all intersection points (15, 18) of the struts (9, 10, 11, 12, 13, 14, 16, 17, 19, 20) with each other,
- wherein the support frame (3) is longer in the direction of the axis of symmetry (S) than transversely to the axis of symmetry (S),
- wherein curved struts (16, 17, 19) are provided between the struts (9, 10, 11, 12, 13, 14) which extend from the respectively longer frame part (6, 8) and at least one of the shorter frame parts (7) in an arc back to the same frame part (6, 7, 8).

2. Light component (2) according to claim 1,
**characterised in that**
the axis of symmetry (S) extends in the direction of travel of the vehicle (1).

3. Light component (2) according to one of claims 1 or 2,
**characterised in that**
three respective struts (9, 10, 11, 12, 13, 14) extend from each of the longer frame parts (6, 8) to a shared one of the shorter frame parts (7) which respectively intersect with at least two other struts (9, 10, 11, 12, 13, 14).

4. Light component (2) according to one of claims 1 to 3,
**characterised in that**
the intersection points (15, 18) are formed reinforced with additional fibre-reinforced plastic.

5. Light component (2) according to one of claims 1 to 4,
**characterised in that**
the panelling (4) is formed to be transparent or so that it can be changed in its transparency and / or colour.

6. Use of the light component (2) according to one of claims 1 to 5 as a vehicle roof.

## Revendications

1. Composant (2) léger pour une carrosserie d'un véhicule automobile (1) comprenant un cadre support (3) comprenant quatre parties de cadre (5, 6, 7, 8), ledit cadre support forme essentiellement un carré, et présente au moins deux montants (9, 10, 11, 12,13, 14, 16, 17, 19, 20) se croisant, qui sont conçus selon des aspects bioniques et dans lequel ou lesquels les points de croisement (15, 18) sont reliés et qui respectivement relient ensemble deux des parties de cadre (5, 6, 7, 8) étant verticales les unes aux autres, et le revêtement (4) appliqué sur le cadre support (3), le cadre support (3) étant conçu en plastique renforcé par des fibres, **caractérisé en ce que** les parties de cadre (5, 6, 7, 8) et les montants (9, 10, 11, 12, 13, 14, 16, 17, 19, 20) sont disposés symétriquement par rapport à un axe de symétrie (S), et
- une partie (21) du cadre support (3) dans la direction de l'axe de symétrie (S) étant conçue sur un côté essentiellement exempt de montants (9, 10, 11, 12, 13, 14, 16, 17, 19, 20) tandis que la partie en regard en direction de l'axe de symétrie (S) présente la plus grande partie des montants (9, 10, 11, 12, 13, 14, 16, 17, 19, 20) et tous les points de croisement (15, 18) des montants (9, 10, 11, 12, 13, 14, 16, 17, 19, 20) les uns sous les autres,
- le cadre de support (3) dans la direction de l'axe de symétrie (S) étant plus long qu'en diagonale par rapport à l'axe de symétrie (S),
- les montants courbés (16, 17, 19) étant présents entre les montants (9, 10, 11, 12, 13, 14), reviennent à partir de la partie de cadre (6, 8) respective la plus longue et au moins à partir de l'une partie de cadre (7) la plus courte en arc vers la même partie de cadre (6, 7, 8).

2. Composant léger (2) selon la revendication 1, **caractérisé en ce que** l'axe de symétrie (S) s'étend dans le sens de la marche du véhicule automobile (1).

3. Composant léger (2) selon l'une quelconque des revendications 1 ou 2, **caractérisé en ce que** respectivement trois montants (9, 10, 11, 12, 13, 14) s'étendent à partir de chacune des parties de cadre les plus longues (6, 8) vers une des parties de cadre les plus courtes communes (7), lesquelles se croissent respectivement avec au moins deux autres montants (9, 10, 11, 12, 13, 14).

4. Composant léger (2) selon l'une quelconque des revendications 1 à 3, **caractérisé en ce que** les points de croisement (15, 18) sont conçus à l'aide de plastique supplémentaire renforcé par des fibres.

5. Composant léger (2) selon l'une quelconque des revendications 1 à 4, **caractérisé en ce que** le revêtement (4) est transparent ou dont sa transparence et/ou sa couleur peut se modifier.

6. Utilisation du composant léger (2) selon l'une quelconque des revendications 1 à 5 en tant que toit de véhicule automobile.
